Europäisches Patentamt

European Patent Office

Office européen des brevets

(19)

(11) Publication number: **0 084 582**
**B1**

# EUROPEAN PATENT SPECIFICATION

(45) Date of publication of patent specification: **13.08.86**

(21) Application number: **82100511.3**

(22) Date of filing: **26.01.82**

(51) Int. Cl.⁴: **B 01 D 57/02,** B 01 D 35/06,
B 28 C 1/02, C 25 B 7/00

(54) **Dewatering with electrically augmented vacuum filter.**

(43) Date of publication of application:
**03.08.83 Bulletin 83/31**

(45) Publication of the grant of the patent:
**13.08.86 Bulletin 86/33**

(84) Designated Contracting States:
**AT BE CH DE FR GB IT LI LU NL SE**

(56) References cited:
EP-A-0 011 504
EP-A-0 028 837
FR-A-1 431 389
FR-A-2 354 802
GB-A-2 077 293
US-A-3 980 547
US-A-4 132 626
US-A-4 168 222

(73) Proprietor: **ENGELHARD CORPORATION
Menlo Park CN 28
Edison New Jersey 08818 (US)**

(72) Inventor: **Wills, Walter R.
10 Old Farm Road
Cedar Knolls New Jersey (US)**

(74) Representative: **Körber, Wolfhart, Dr. et al
Patentanwälte Dipl.-Ing. H. Mitscherlich Dipl.-
Ing. K. Gunschmann Dr.rer.nat. W. Körber
Dipl.Ing. J. Schmidt-Evers Dipl.-Ing. W. Melzer
Steinsdorfstrasse 10
D-8000 München 22 (DE)**

Courier Press, Leamington Spa, England.

## Description

This invention relates to improvements in the operation of known electrically augmented vaccum filters, hereinafter EAVF, in dewatering aqueous suspension. More specifically this invention relates to the use of special membranes to restrict the migration of certain ionic species and particulate solids in dewatering with EAVF. The invention is especially concerned with improvements in dewatering suspensions of kaolin clay.

Filtration of slurries by electrokinetic methods (electrophoresis, electroosmosis) has a relatively long history. Reference is made to US—A—1229203 to Schwerin (1917) which discloses electrically dewatering dispersed suspensions of fine-particle size solids. Recent interest in electrofilters has intensified as a result of increased demand for hydrated (uncalcined kaolin clay in the form of dispersed fluid high-solids (eg. 70%) slurries instead of dry powders and to produce higher feed solids to clay dryers when it is necessary to ship in dry powder form. A commercially utilized design of such a unit is disclosed in US—A—4168222 and US—A—4107026 to Freeman, the entire disclosure of which are incorporated herein by cross-reference thereto. These patents describe the workings of an electrically augmented vaccum filter (EAVF). An electro-osmotic/phoretic process for concentrating clay is disclosed in US—A—4110189 to Kunkle et al. An electroflocculation cell is disclosed in US—A—4048038 to Kunkle, and an electrokinetic cell is disclosed in US—A—3980547 also to Kunkle.

The incorporation of an electrofilter as part of an improved system for producing calcined clay by utilizing the electrofilter to dewater relatively dilute, e.g. 40% solids, slurries of dispersed kaolin to levels suitable for spray drying, e.g. 55 to 60% solids, is disclosed in the US—A—4246039 to Mixon, which application is commonly assigned with applicant's. The entire disclosure of said application is incorporated herein by cross-reference.

Clay is conventionally wet-processed by slurrying crude clay in water with the aid of dispersing chemicals such as sodium silicate, sodium hexametaphosphate, sodium tripolyphosphate and tetrasodium pyrophosphate. Certain polymeric organic materials are also employed, alone or in combination with inorganic dispersants. The clay slurry is blunged, degritted, classified and bleached to remove undesirable foreign matter and to improve brightness and other end-use properties. In many operations the clay is also beneficiated to remove discrete impurities especially those that are colored. Following these steps, the clay is dewatered or filtered to produce a solid filter cake of 50 to 60% clay. This cake may be redispersed and spray dried or otherwise dried in the flocculated state or dispersed (deflocculated) state depending upon the end use.

For various reasons it is becoming increasingly desirable for the clay producers to ship slurries containing about 70% solids. The addition of 30 to 50% spray dried clay to slurry of 50—60% solids redispersed filter cake is conventionally practiced at the present time to yield a 70% solids slurry. This addition of spray dried clay to the filter cake adds significantly to the cost of the slurry due to the relatively high costs of preparing the spray dried clay. Therefore it would be desirable to be able to prepare 70% solids slurries without the necessity of adding spray dried clay. Similarly it would be beneficial to increase the solids content of filtered feed charged to dryers when it is desired to supply the clay in dried form.

The use of an electrofilter with vaccum may be advantageous for its ability to dewater suspensions economically. The electrofilter operates on the principle that charged particles when subject to the action of an applied (direct current) electric field will move in the direction of opposite polarity. This traveling of solid particles through a liquid due to the application of an electric field is called electrophoresis. The clay particles are normally negatively charged and move toward the anode (+) electrode. When applied to aqueous clay suspensions, electrophoresis causes suspended clay particles to deposit on a filter medium surrounding the anode. Commercial EAVF systems include an anolyte chamber associated with each anode and means for charging anolyte solution into and out of the chamber. Vaccum at the anode is used to retain anolyte and remove gaseous products of reaction. Vaccum at the cathode is used to remove filtrate liquid and gaseous products of reaction at the cathode.

Other ionic species notably sodium cations arising principally from the dispersant and the anolyte, and chloride and hydroxyl anions will also move in the electric field. Reactions at the electrodes will generate ionic species and gaseous products depending upon the electrolytes used. For example, in the EAVF the anodic compartment may be filled with an electrolyte such as sodium chloride solution. Under the action of the electric field chlorine gas is produced at the anode and sodium ions will move away from the anode and react (with an electron) at the cathode to produce sodium hydroxide and hydrogen gas. Hydroxyl anions, being negatively charged, will move away from the cathode at a rate determined by the strength of the electric field and the motion of the filtrate resulting from the applied vaccum at the cathode.

In general electrically augmented filtration of kaolin slurries is often more cost-effective than conventional means, because less energy is used to achieve an equivalent result. In addition, when the cake discharge of such a filter is saleable virtually as is without further processing, the desirability of incorporating EAVF in kaolin processing schemes becomes plain.

However, several problems may arise in the operation of an EAVF. Mobility of ions in the electrokinetic cell may give rise to undesirable anions being present in the filter cake. For example, if OH⁻ ions are present in the filter cake, optimum dispersion of the cake becomes impossible, since the slurry is overdispersed and slurry viscosity is undesirably high as a result. The ionic contamination of the filter cake using an EAVF operated with an anolyte has resulted in excessive viscosity of the clay slurry product and an excessively low specific resistance of the clay slurry product. This has limited use of the system for filtering clay intended for paper coating or paint applications. Also, under the pressure driving forces (vaccum) fine particle size kaolin may seep through the tightly woven filter cloths presently in use and contaminate the anolyte at the anode or the filtrate at the cathode.

The present invention relates to a device for dewatering a suspension of particulate solids such as hydrous kaolin clay using an electrically augmented vaccum filter apparatus comprising a tank adapted to receive and discharge suspension to be filtered, and anodic and cathodic electrode structures adapted to be positioned in said tank in a manner such as to be submerged in suspension in said tank, said anodic electrode structure being adapted for deposition thereon of filter cake and including an anodic element, electrically nonconductive housing for said anodic element and means for supplying anolyte into and out of said housing, said cathodic electrode structure including a cathodic element and being surrounded by a filter medium adapted for the passage therethrough of filtrate. This device is characterized in a perm-selective membrane associated with said anodic structure in a manner such as to permit passage of cations from said anolyte therethrough and into and through said filter cake and suspension to be filtered while substantially preventing passage of anions and gaseous electrochemical reaction products from said anolyte therethrough and into filter cake deposited on said anodic structure.

We have invented an improved system and process for dewatering aqueous suspensions of particulate solids, especially dispersed suspensions of hydrous kaolin clay, by means of an EAVF in which the anode structure contains means for circulating an anolyte within the anode structure substantially as described in US—A—4168222 (supra). In accordance with the invention a perm-selective membrane is incorporated onto the anode structure. Such membrane presents the passage of anions and gaseous reaction products from the anolyte while allowing cations to move freely therethrough. As a result, anions such as chloride ions originating in the anolyte do not contaminate the filter cake deposited on the anode with deleterious effects noted above. Furthermore, the perm-selective membrane in the form of a film supported on a grid effectively prevents fine particles of kaolin from contaminating the electrolyte in the anode compartments (anolyte) while simultaneously preventing contamination of the filter cake by seepage of anions from the anolyte through the membrane. In a presently preferred embodiment, the perm-selective membrane is placed around the anode support structure between the grid and the filter medium normally associated with the anodic structure of an EAVF that is operated with a circulating anolyte.

Preferably the cathodic structure of the EAVF is also altered from the configuration described in the aforementioned patents of Freeman by placing a perm-selective membrane capable of selectively passing only cations onto the cathode structure and by adding a chamber for catholyte and means for charging and withdrawing catholyte therefrom. The perm-selective membrane prevents contamination of feed slurry and filter cake by the cathodic reaction products (primarily hydroxyl ions). It should be noted here that in this embodiment the cathode support structure is conductive and is in fact the electrode. Catholyte solution is, in effect, formed *in situ* and typically contains $OH^-$ and $Na^+$. In this embodiment it is necessary to change the cathode compartment from that described in the aforementioned patents of Freeman by: placing a perm-selective membrane on the inner cathode support structure (the cathode electrode); placing filter medium supported on a second, nonconductive outer support grid; and adding an electrolyte (catholyte) and recirculation system within the cathode support structure similar to that of the anode compartment. This arrangement prevents anions such as hydroxyl ions arising at the cathode from migrating under the influence of the electric field across the space between the electrodes and contaminating the feed suspension and/or the filter cake.

In a specially preferred embodiment of the instant invention the EAVF system includes a multiplicity of parallel and alternating anodes and cathodes and a perm-selective membrane is placed around each anode and each cathode support structure of the system. The perm-selective membranes used in practice of the present invention differ from the so-called "semi-permeable membranes" described in the aforementioned patents of Kunkle and Kunkle et al; the membranes used in the prior art structures are simply filter cloths and are so described in the patents of Kunkle and Kunkle et al.

Further description of the process and device of the present invention concept will be made with reference to the accompanying drawings. In the drawings, the device and process of the invention are illustrated by way of simplified diagrammatic flow schemes; corresponding systems and flow schemes of the prior art are presented to facilitate comparison. It will be noted that only the anodic and/or cathodic structures of EAVF are shown. These are believed to provide a concise illustration and clear understanding of the invention without providing detail nonessential to an understanding of the invention. For example, in all drawings the anode and cathode structures are understood to be submerged in slurry to be dewatered in an EAVF. Means for lifting the anode structure with deposited filter cake are known in the art and details for effecting lifting of anode and scraping off filter cake therefrom before dropping the anode structure back into feed slurry for further deposition of filter cake are not shown. Similarly, vaccum means associated with anode and cathode structures, pumps, etc., are not shown.

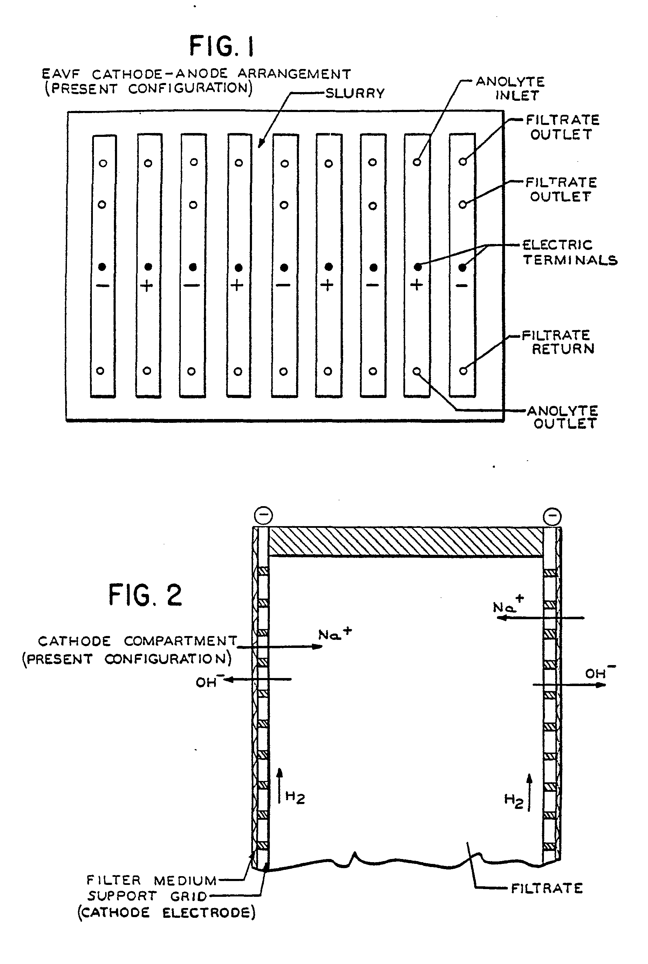

FIG. 1 is a top view (illustrated diagrammatically) of the cathode structure of an EAVF (present configuration).

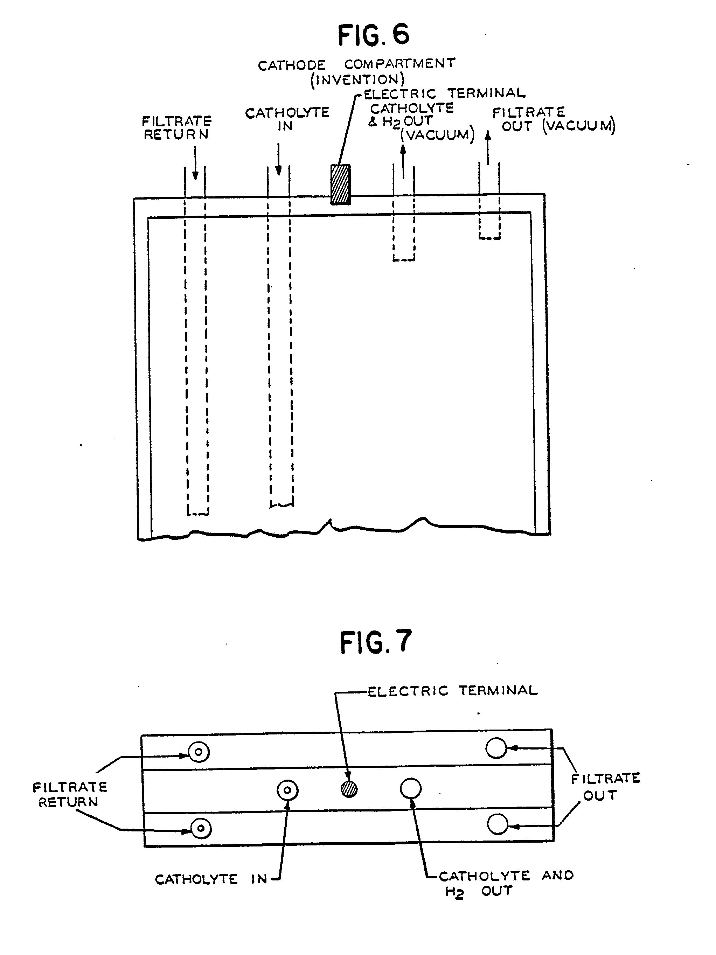

FIG. 2 is a side view (illustrated diagrammatically) of the operation of the present cathode structure of an EAVF. FIG. 2 shows the flow of filtrate and principal catholyte constituents ($H_2$, $Na^+$ and $OH^-$). A front view of such cathode structure is given in FIG. 7 of US—A—4168222.

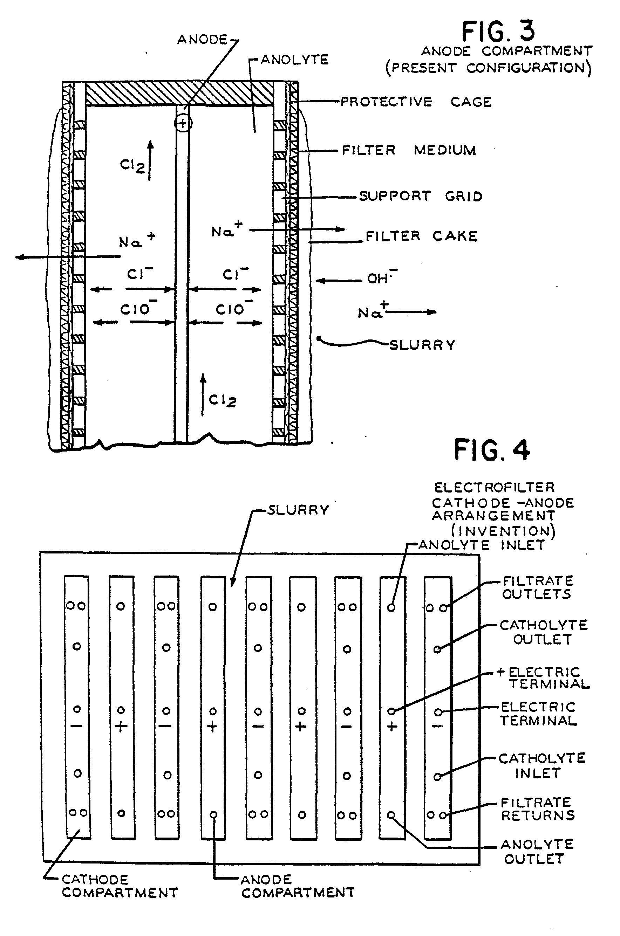

FIG. 3 is a side view (illustrated diagrammatically) of the present anode structure including an anolyte chamber. Reference is made to FIG. 5 of US—A—4168222 for an illustration of a front view of such structure. FIG. 3 illustrates diagrammatically the slurry, deposition of filter cake, flow of gas and ions when the anolyte is sodium chloride.

FIG. 4 is a top view of a preferred electrofilter cathode-anode arrangement of the invention illustrating the provision for circulation of catholyte. For purposes of comparison, see FIG. 1.

FIG. 5 is a side view of the anode compartment in accordance with the invention showing the modified path for ion migration resulting from the presence of a perm-selective membrane on the anode structure. As illustrated in FIG. 5, the anolyte is sodium chloride. (For a front view of the modified anode structure, reference is made to FIG. 5 of US—A—4168222).

FIG. 6 illustrates a front view of the cathode structure of the invention and shows the provision of a catholyte compartment and circulation of catholyte therein. Also shown is the flow of filtrate. FIG. 7 is a top view of the structure illustrated in FIG. 6.

FIG. 8 is a side view of a cathodic structure of the invention, illustrating the features of a catholyte chamber and perm-selective membrane. FIG. 8 illustrates the cathodic reaction, flow of resulting reaction products ($H_2$, $Na^+$ and $OH^-$) and ilustrates how the perm-selective membrane in cooperation with added catholyte chamber functions to prevent $OH^-$ resulting from the cathodic reaction from passing into feed slurry by being diverted into the catholyte chamber for removal with catholyte. Compare with FIG. 2, discussed above.

The hydrous kaolin clay slurries to be dewatered by the improved EAVF of the present invention may be destined for, and as a result, tailored to specific end uses. For example, the dewatered suspensions (slurries) may be used in paper coating or paint formulations and as such the kaolin clay particles will usually have sizes in the range of about 80 to 100% finer than 2 microns, equivalent spherical diameter (e.s.d) with average particle sizes of 0.3 to 0.9 microns, e.s.d. The clay product discharged from the improved EAVF of the present invention may be used to produce calcined clay pigments as described in US—A—4246039.

It is preferred to dewater these slurries in deflocculated (dispersed) condition wherein deflocculation is accomplished with anionic and/or organic dispersants, such as TSPP (tetrasodium pyrophosphate), Calgon® (sodium hexametaphosphate), and/or ammonium or sodium polyacrylates. The dispersants enhance the negative charge surrounding the clay particles and hence their electrophoretic mobility.

One embodiment of an EAVF described in US—A—4168222 comprises a tank, a series of parallel and alternating cathode and anode electrodes submerged in a circulating slurry of clay solids suspended in a carrier liquid in the tank. A direct current is applied to the electrodes to deposit solids as a filter cake on the walls of the support structure of the anode. Each anode is a self-contained hollow structure having planar surfaces and comprises an anode (+) electrode, means for circulating an electrolyte (anolyte) in and out of the compartment, a support grid, a filter medium and a protective cage. When the anolyte is sodium chloride solution, chlorine gas will be generated at the anode by virtue of electrochemical reaction. The extent of raction is dependent on the electric current density, but the vaccum applied to the anode and the recirculating anolyte are effective means for removal of the majority of the gas from the anode compartment.

Irrespective of modification of the EAVF to provide for association of a perm-selective membrane with each cathodic structure, the cathodes will have liquid-pervious walls, in particular a liquid-pervious filter cloth (substantially impervious to the passage of clay) covering a supporting grid or grid-like structure. Cloth similar to that used on the anode support structure may be used as the filter medium. A source of vaccum connected to the hollow, planar cathode causes the liquid phase of the slurry (filtrate) to fill the hollow interior of each cathode between the electrode and the support structure. Filtrate is pumped from the filtrate-filled hollow cathodes at a controlled rate. Under application of electric current the filtrate, which contains various ionic species and water, will react at the cathode to produce primarily hydrogen gas and sodium hydroxide solution.

The apparatus also includes an overhead traveling carriage equipped with hoists to raise an anode vertically out of the slurry. Doctor blades associated with the traveling carriage are constructed to scrape the clay filter cake adhering to both planar surfaces of the anode while the anode is being returned to the tank. Scraped clay is collected on a conveyor belt. The operation is repeated on the next anode in sequence. Means are provided to pump slurry to and from the tank to keep the electrodes submerged during dewatering operations. The curent density and vaccum are controlled to achieve a desired balance between the migration of clay to the anodes and removal of filtrate through the cathodes.

Slurry is charged to an EAVF as a fluid dispersed (deflocculated) aqueous suspension. Typically, pH is in the range of 6 to 9.5. Deflocculants include but are not limited to sodium hydroxide, sodium condensed phosphates, sodium carbonate and mixtures thereof. As mentioned organic dispersants may be used. Conventional amounts of dispersants are present in the dispersed slurry of clay fed to the electrofilter. For example, the slurry may contain 3 to 6 pounds (1.36 to 2.72 kg) of commercial sodium silicate solution such as O® brand. Typical clay solids content of feed slurries and filter cakes are disclosed in US—A—4246039, US—A—4168222 and US—A—4107206.

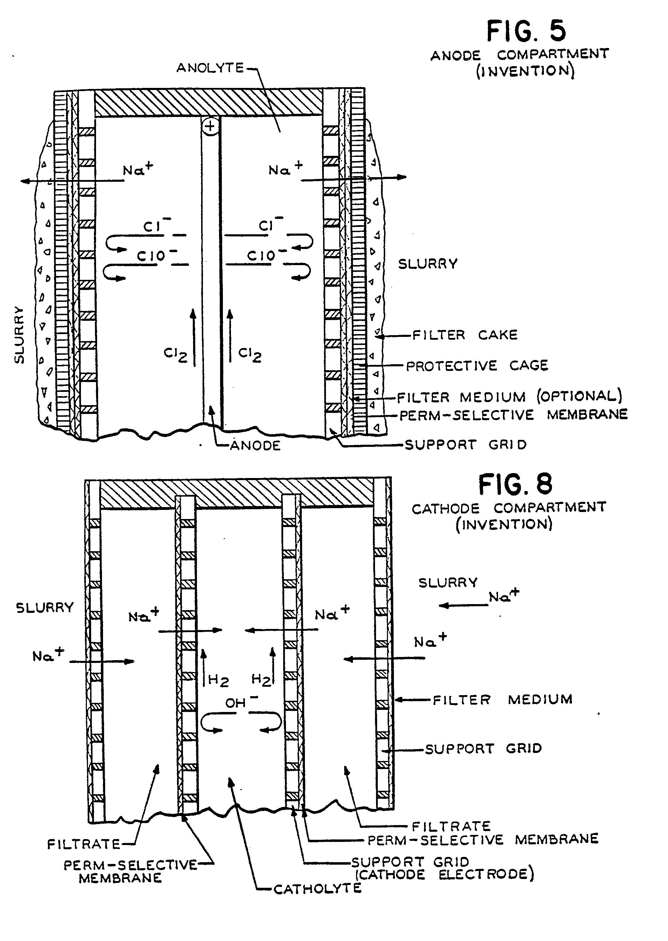

With reference to FIG. 5 it is presently preferred to place the perm-selective membrane onto the anode compartment between the support directly adjacent to it and the filter medium acts to minimize the possibility of clay solids clogging the perm-selective membrane. When the cathode structure is equipped with a perm-selective membrane, the membrane must be positioned on two inner support grids, which also constitute the cathode electrode, thereby formimg a center compartment which is adapted to contain the catholyte solution. During start-up it may be necessary to introduce a solution of electrolyte into the catholyte compartment. During operation electrolyte is formed in situ by the electrolyte reactions occurring at the cathode. As shown in FIG. 8, an outer, nonconductive filter medium support grid covered with a filter medium is provided on each of the inner two operating sides of the cathode structure, forming inner spaces between the nonconductive filter medium support grid and the perm-selective membrane in which filtrate is collected. A recirculation mechanism for the catholyte is also added.

Exemplary of suitable anolytes are sodium chloride, sodium carbonate and sodium hydroxide solutions. Others may be used. Use of nonchloride anolytes avoids liberation of chlorine gas at the anode and eliminates the possibility of corrosive chloride and hypochlorite ions contacting metal parts. When sodium carbonate is used, oxygen gas and carbon dioxide are liberated at the anode. The use of sodium hydroxide solution as the anolyte provides the advantage of high electrical conductivity without the generation by corrosive reaction products.

Sodium cations migrate to the cathode and undergo electrochemical reaction involving water. Hydrogen gas is given up in the reaction and sodium hydroxide is formed. Thus in prior practice involving dewatering kaolin slurries the filtrate had a high pH, generally 10 to 13. When the perm-selective membrane is used surrounding the cathode electrode grid within an outer, nonconductive support structure on which the filter medium is placed, sodium ions migrate through the membrane and undergo reaction at the cathode, liberating hydrogen which is taken up into the catholyte solution. The $OH^-$ ions report into the catholyte compartment and are prevented from migrating into the filtrate by the perm-selective membrane, giving rise thereby to a filtrate of more neutral pH. This prevents contamination of the feed suspensions of filter cake with hydroxyl and other anions which are deleterious to the dispersion of the slurry. In the case of kaolin slurries, anion contamination of the filter cake raises the viscosity of kaolin/water slurries and renders the kaolin unsuitable for use in its intended applications for paper coatings or for fillers in paints.

Membranes suitable for purposes of the invention are permeable to cations and substantially impermeable to anions, gases, water and other liquids. Useful perm-selective membranes are perfluorosulfonic acid polymeric materials sold under the trademark Nafion® by E. I. du Pont de Nemours, Inc. Other membranes of a perm-selective nature can be used. The performance of Nafion® membranes depend to a large extent upon the number of sulfonic acid groups in the polymer structure. The membrane itself has superior chemical stability and toughness relative to other perm-selective membranes; for example, those made with carboxylic acid groups in place of sulfonic acid groups. Nafion® membranes are permeable to positively charged ions (cations) but are impermeable to negatively charged ions (anions).

It should be noted that in EP—A2—28 837, there is described a process and an apparatus for the electrolytic recovery of particulate solids from liquid — normally aqueous — media. Its anodic structure may comprise an ion exchange membrane such as a Nafion® membrane. However, the known process and apparatus does not use vaccum filtration and even has no teaching thereto Further it does not contain means for circulating an anolyte within its anode structure.

**Claims**

1. A device for dewatering a suspension of particulate solids, such as hydrous kaolin clay using an electrically augmented vaccum filter apparatus comprising a tank adapted to receive and discharge suspension to be filtered, and anodic and cathodic electrode structures adapted to be positioned in said tank in a manner such as to be submerged in suspension in said tank, said anodic electrode structure being adapted for deposition thereon of filter cake and including an anodic element, electrically nonconductive housing for said anodic element and means for supplying anolyte into and out of said housing, said cathodic electrode structure including a cathodic element and being surrounded by a filter medium adapted for the passage therethrough of filtrate, characterized in a perm-selective membrane associated with said anodic structure in a manner such as to permit passage of cations from said anolyte therethrough and into and through said filter cake and suspension to be filtered while substantially preventing passage of anions and gaseous electrochemical reaction products from said anolyte therethrough and into filter cake deposited on said anodic structure.

2. The device of claim 1, characterized in that said anodic structure also contains a filter medium to minimize deposit of particulate solid on said membrane and/or to provide mechanical protection for said membrane.

3. The device of claim 1, characterized in that said anodic structure does not contain a filter medium and said membrane is in the form of a film that is sufficiently strong to obviate the need for a filter medium for mechanical protection.

4. The device of any one of claims 1 to 3, characterized in a catholyte chamber associated with said cathodic element for housing a catholyte solution, means for circulating catholyte solution into and removing catholyte solution and reaction products from said catholyte chamber, a filtrate chamber exterior to said catholyte chamber, means for removing filtrate from the filtrate chamber, a perm-selective membrane capable of passing cations while substantially preventing the passage of anions or gases and positioned between said catholyte and said filtrate chambers which substantially prevents said anions and gases from passing into the filtrate or the suspension being dewatered, and a filter medium surrounding the filtrate chamber which substantially prevents particulate solids from passing into the filtrate chamber.

5. The device of any one of claims 1 to 4, characterized in that said perm-selective membrane or membranes comprise a perfluorosulfonic acid polymeric film.

6. A process for dewatering a suspension of particulate solid characterized in dewatering said suspension in the device of any one of claims 1 to 5.

7. The process in accordance with claim 6, characterized in that said suspension comprises a deflocculated aqueous suspension of clay.

8. The process of claim 6 or 7, characterized in that said clay is hydrous kaolin clay.

9. The process of any one of claims 6 to 8, characterized in that said anolyte contains sodium ions and said membrane is permeable thereto.

10. The process of any one of claims 7 to 9, characterized in that said anolyte is selected from the group consisting of sodium chloride, sodium hydroxide and sodium carbonate.

11. The process of any one of claims 6 to 10, characterized in that said perm-selective membranes associated with said anode structure comprise a perfluorosulfonic acid polymeric film.

## Patentansprüche

1. Vorrichtung zum Entwässern einer Suspension aus partikelförmigen Feststoffen, wie wässrigem Kaolinton, unter Verwendung eines elektrisch verstärkten Vakuumfilters mit einem Behälter zum Aufnehmen und Abgeben der zu filternden Suspension und Anoden- und Kathodenelektrodenanordnungen, die in dem betreffenden Behälter derart positionierbar sind, daß sie in die Suspension in dem Behälter eingetaucht sind, wobei die Anodenelektrodenanordnung für ein Niederschlagen eines Filterkuchens ausgebildet ist und ein Anodenelement, ein elektrisch nichtleitendes Gehäuse für das Anodenelement und eine Einrichtung aufweist, die einen Anolyten in das Gehäuse und aus diesem abgibt, wobei die Kathodenelektrodenanordnung ein Kathodenelement aufweist und von einem Filtermedium umgeben ist, durch das ein Filtrat treten kann, dadurch gekennzeichnet, daß eine permselektive Membran der Anodenanordnung so zugeordnet ist, daß der Durchtritt von Kationen von dem Anolyten durch diese hindurch und in sowie durch den Filterkuchen und die zu filternde Suspension ermöglicht ist, während der Durchtritt von Anionen und gasförmigen elektrochemischen Reaktionsprodukten von dem Anolyten durch diese hindurch und in den auf der Anodenanordnung niedergeschlagenen Filterkuchen im wesentlichen verhindert ist.

2. Vorrichtung nach Anspruch 1, dadurch gekennzeichnet, daß die Anodenanordnung außerdem ein Filtermedium enthält, um den Niederschlag von partikelförmigen Feststoffen auf der Membran zu minimieren und/oder um einen mechanischen Schutz für die Membran zu erzielen.

3. Vorrichtung nach Anspruch 1, dadurch gekennzeichnet, daß die Anodenanordnung kein Filtermedium enthält und die Membran in Form eines Filmes vorliegt, der ausreichend fest ist, so daß der Bedarf nach einem Filtermedium für mechanischen Schutz beseitigt ist.

4. Vorrichtung nach einem der Ansprüche 1 bis 3, gekennzeichnet durch eine dem Kathodenelement zugeordnete Katholytkammer zur Aufnahme einer Katholytlösung, eine Einrichtung zum Fördern von Katholytlösung in die Katholytkammer und zum Abführen von Katholytlösung und Reaktionsprodukten aus der Katholytkammer, eine Filtratkammer außerhalb der Katholytkammer, eine Einrichtung zum Entfernen von Filtrat aus der Filtratkammer, eine permselektive Membran, die den Durchtritt von Kationen zuläßt, jedoch den Durchtritt von Anionen oder Gasen im wesentlichen verhindert, und die zwischen der Katholytkammer und der Filtratkammer vorgesehen ist, was, im wesentlichen, verhindert, daß Anionen und Gase in das Filtrat oder die zu entwässernde Suspension gelangen, und die Filtratkammer umgebendes Filtermedium, das, im wesentlichen, verhindert, daß partikelförmige Feststoffe in die Filtratkammer gelangen.

5. Vorrichtung nach einem der Ansprüche 1 bis 4, dadurch gekennzeichnet, daß die permselektive(n) Membran oder Membranen einen Perfluorsulfosäure-Polymerfilm aufweisen.

6. Verfahren zum Entwässern einer Suspension eines partikelförmigen Feststoffs, dadurch gekennzeichnet, daß die Suspension in einer Vorrichtung nach einem der Ansprüche 1 bis 5 entwässert wird.

7. Verfahren nach Anspruch 6, dadurch gekennzeichnet, daß die Suspension eine entflockte wässrige Suspension von Ton enthält.

8. Verfahren nach Anspruch 6 oder 7, dadurch gekennzeichnet, daß der Ton wässriger Kaolinton ist.

9. Verfahren nach einem der Ansprüche 6 bis 8, dadurch gekennzeichnet, daß der Anolyt Natriumionen enthält und daß die Membran dafür durchlässig ist.

10. Verfahren nach einem der Ansprüche 7 bis 9, dadurch gekennzeichnet, daß der Anolyt aus der Natriumchlorid, Natriumhydroxid und Natriumkarbonat enthaltenden Gruppe gewählt ist.

11. Verfahren nach einem der Ansprüche 6 bis 11, dadurch gekennzeichnet, daß die der Anodenanordnung zugeordneten permselektiven Membranen einen Perfluorsulfosäure-Polymerfilm aufweisen.

**Revendications**

1. Un dispositif de déshydratation d'une suspension de solides en particules, comme de l'argile-kaolin hydratée, utilisant un appareillage de filtrage sous vide assisté électriquement, comprenant une cuve adaptée pour recevoir et décharger une suspension à filtrer, et des structures d'électrodes anodique et cathodique adaptées pour être disposées dans ladite cuve de manière à être immergées dans la suspension se trouvant dans ladite cuve, ladite structure d'électrode anodique étant adaptée pour recevoir un dépôt de croûte de filtrage et comprenant un élément anodique, un carter électriquement non conducteur pour ledit élément anodique et un moyen introduire un anolite dans ledit carter et pour l'en faire sortir, ladite structure d'électrode cathodique comprenant un élément cathodique et étant entourée par un milieu de filtrage adapté pour le passage de filtrat au travers, caractérisé par une membrane à perméabilité sélective qui est associée à ladite structure anodique de manière à permettre un passage de cations provenant dudit anolite au travers d'elle et dans et au travers de ladite croûte de filtrage et de la suspension à filtrer tout en empêchant sensiblement un passage d'anions et de produits gazeux de réaction électrochimique provenant dudit anolite au travers d'elle et dans la croûte de filtrage déposée sur ladite structure anodique.

2. Le dispositif selon la revendication 1, caractérisé en ce que ladite structure anodique contient également un milieu de filtrage pour réduire au minimum un dépôt de particules solides sur ladite membrane et/ou pour assurer une protection mécanique de ladite membrane.

3. Le dispositif selon la revendication 1, caractérisé en ce que ladite structure anodique ne contient pas un milieu de filtrage et ladite membrane se présente sous la forme d'un film qui est suffisamment résistant pour éviter l'obligation de prévoir un milieu de filtrage pour une protection mécanique.

4. Le dispositif selon l'une quelconque des revendications 1 à 3, caractérisé par une chambre de catholite associée audit élément cathodique pour contenir une solution de catholite, un moyen pour faire circuler la solution de catholite dans ladite chambre de catholite et pour évacuer la solution de catholite et les produits de réaction de ladite chambre de catholyte, une chambre de filtrat extérieure à ladite chambre de catholite, un moyen pour évacuer le filtrat de la chambre de filtrat, une membrane à perméabilité sélective pouvant laisser passer des cations tout en empechant sensiblement le passage d'anions ou de gaz et positionnée entre lesdites chambres de catholite et de filtrat pour empêcher sensiblement lesdits anions et lesdits gaz de pénétrer dans le filtrat ou la suspension en train d'être déshydratée, et un milieu de filtrage entourant la chambre de filtrat et qui empêche sensiblement des particules solides de pénétrer dans la chambre de filtrat.

5. Le dispositif selon l'une quelconque des revendications 1 à 4, caractérisé en ce que la ou lesdites membranes à perméabilité sélective comprennent un film de polymère d'acide perfluorosulfonique.

6. Un procédé de déshydratation d'une suspension de particules solides, caractérisé en ce que la déshydratation de ladite suspension est effectuée dans le dispositif selon l'une quelconque des revendications 1 à 5.

7. Le procédé selon la revendication 6, caractérisé en ce que ladite suspension comprend une suspension aqueuse d'argile défloculée.

8. Le procédé selon la revendication 6 ou 7, caractérisé en ce que ladite argile est de l'argile-kaolin hydratée.

9. Le procédé selon l'une quelconque des revendications 6 à 8, caractérisé en ce que ledit anolite contient des ions sodium et ladite membrane est perméable à ceux-ci.

10. Le procédé selon l'une quelconque des revendications 7 à 9, caractérisé en ce que ledit anolite est choisi dans le groupe comprenant le chlorure de sodium, l'hydroxyde de sodium et le carbonate de sodium.

11. Le procédé selon l'une quelconque des revendications 6 à 10, caractérisé en ce que lesdites membranes à perméabilité sélective qui sont associées à ladite structure d'anode comprennent un film de polymère d'acide perfluorosulfonique.

# FIG. 1

EAVF CATHODE-ANODE ARRANGEMENT
(PRESENT CONFIGURATION)

— SLURRY

ANOLYTE INLET

FILTRATE OUTLET

FILTRATE OUTLET

ELECTRIC TERMINALS

FILTRATE RETURN

ANOLYTE OUTLET

# FIG. 2

CATHODE COMPARTMENT
(PRESENT CONFIGURATION)

$Na^+$

$OH^-$

$Na^+$

$OH^-$

$H_2$

$H_2$

FILTER MEDIUM
SUPPORT GRID
(CATHODE ELECTRODE)

FILTRATE

1

## FIG. 3
### ANODE COMPARTMENT (PRESENT CONFIGURATION)

ANODE

ANOLYTE

PROTECTIVE CAGE

FILTER MEDIUM

SUPPORT GRID

FILTER CAKE

$Cl_2$

$Na^+$

$Na^+$

$Cl^-$    $Cl^-$

$OH^-$

$ClO^-$    $ClO^-$

$Na^+$

SLURRY

$Cl_2$

## FIG. 4

### ELECTROFILTER CATHODE–ANODE ARRANGEMENT (INVENTION)

SLURRY

ANOLYTE INLET

FILTRATE OUTLETS

CATHOLYTE OUTLET

+ ELECTRIC TERMINAL

ELECTRIC TERMINAL

CATHOLYTE INLET

FILTRATE RETURNS

ANOLYTE OUTLET

CATHODE COMPARTMENT

ANODE COMPARTMENT

2

# 0 084 582

## FIG. 5
### ANODE COMPARTMENT
### (INVENTION)

ANOLYTE

$Na^+$

$Na^+$

SLURRY

$Cl^-$

$Cl^-$

$ClO^-$

$ClO^-$

SLURRY

$Cl_2$

$Cl_2$

FILTER CAKE

PROTECTIVE CAGE

FILTER MEDIUM (OPTIONAL)

PERM-SELECTIVE MEMBRANE

ANODE

SUPPORT GRID

## FIG. 8
### CATHODE COMPARTMENT
### (INVENTION)

SLURRY

$Na^+$

SLURRY

$Na^+$

$Na^+$

$Na^+$

$Na^+$

$H_2$

$H_2$

FILTER MEDIUM

$OH^-$

SUPPORT GRID

FILTRATE

PERM-SELECTIVE MEMBRANE

FILTRATE

PERM-SELECTIVE MEMBRANE

SUPPORT GRID
(CATHODE ELECTRODE)

CATHOLYTE

3

# FIG. 6

CATHODE COMPARTMENT
(INVENTION)

ELECTRIC TERMINAL

FILTRATE
RETURN

CATHOLYTE
IN

CATHOLYTE
& H₂ OUT
(VACUUM)

FILTRATE
OUT (VACUUM)

# FIG. 7

ELECTRIC TERMINAL

FILTRATE
RETURN

FILTRATE
OUT

CATHOLYTE IN

CATHOLYTE AND
H₂ OUT